# EUROPEAN PATENT APPLICATION

(11) **EP 0 986 277 A1**
(43) Date of publication of application: **15.03.2000**
(21) Application number: 99909291.9
(22) Date of filing: 23.03.1999
(51) Int. Cl.: H04Q 7/36

(54) **BASE STATION AND METHOD OF COMMUNICATION**

(30) Priority: 27.03.1998 JP 10054798
(71) Applicant: MATSUSHITA ELECTRIC INDUSTRIAL CO., LTD., Kadoma-shi, Osaka 571-8501 (JP)
(72) Inventor: HIRAMATSU, Katsuhiko, Yokosuka-shi, Kanagawa 239-0831 (JP)
(74) Representative: Grünecker, Kinkeldey, Stockmair & Schwanhäusser Anwaltssozietät
(86) International application number: JP9901431
(87) International publication number: WO9951049

(57) **Abstract**

Base station 11 transmits downlink signal A to mobile station 12A with wide directivity and transmits downlink signal B to mobile station 12B with narrow directivity with an overlap with downlink signal A. Despreader 104 of mobile station 12B measures the reception power of downlink signal A and despreader 105 measures the reception power of downlink signal B. The respective reception power measurement results are carried on uplink signal B by frame assembly section 106 and reported to base station 11. Base station 11 determines whether the directivity orientation is matched or not based on the transmission power ratio and reception power ratio and controls the directivity and transmission power of the transmission signal based on the result. Thus, base station 11 precisely determines whether the transmission power and directivity of downlink signal B are accurate or not and modifies the transmission power and directivity.

## Description

### Technical Field

The present invention relates to a base station apparatus that transmits directivity-carrying signals to a plurality of mobile station apparatuses and a radio communication method used in a radio communication system.

### Background Art

A radio communication system such as car telephone or portable telephone uses a multiple access system in which a plurality of stations carry out communications on a same frequency band simultaneously. The multiple access system is a communication system in which a service area is divided into cells and one base station is placed in each cell and communications are performed between the base station and a plurality of mobile stations in each cell.

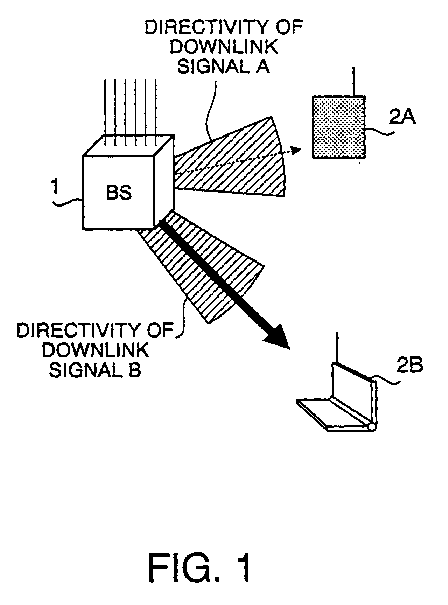

FIG.1 is a system block diagram showing an outlined configuration of a radio communication system including a conventional base station. In FIG.1, base station 1 carries out communications with mobile station 2A and mobile station 2B simultaneously using a same frequency band. Base station 1 controls transmission power in accordance with the movement of each mobile station in communication.

Here, in order to suppress fading and carry out a high quality communication, the base station needs to transmit signals carrying directivity whose intensity varies depending on the direction. In this case, the base station needs to carry out so-called directivity tracking that makes the directivity of a transmission signal track the movement of each mobile station.

One of the systems carrying out directivity tracking is an adaptive array that controls directivity by receiving signals from a plurality of antennas and determining a weighting coefficient of each antenna output based on a specific control algorithm.

A conventional base station estimates the incoming direction of a signal received from a mobile station through an adaptive array, etc. and carries out directivity tracking based on the estimation result.

However, if the power of a signal received from the mobile station is small or if the information of a transmission power control signal in the reception signal reports that transmission power is small, the conventional base station has a problem of failing to determine whether this phenomenon has occurred due to a shift of directivity or due to small transmission power.

Therefore, although there is a shift of directivity if the base station increases the transmission power of the transmission signal, interference with other neighboring mobile stations is increased, rendering communications impossible. On the contrary, although the transmission power is small, if the base station performs directivity tracking, not only the mobile station, the communication destination, is unable to communicate, but also interference with other neighboring mobile stations increases, rendering those other neighboring mobile stations unable to communicate.

### Disclosure of Invention

It is an objective of the present invention to provide a base station apparatus and radio communication method capable of precisely determining whether the cause for small reception power at a mobile station apparatus is due to a shift of directivity or due to insufficient transmission power and correct the transmission power and directivity.

This objective is achieved by calculating a transmission power ratio and reception power ratio of two signals with different directivities and determining whether there is a shift of directivity or not based on whether the difference between the transmission power ratio and reception power ratio is greater than a reference value or not.

### Brief Description of Drawings

FIG. 1 is a system block diagram showing an outlined configuration of a radio communication system including a conventional base station;
FIG.2 is a system block diagram showing a configuration of a radio communication system including a base station according to Embodiment 1 of the present invention;
FIG.3 is a block diagram showing a configuration of a mobile station that carries out a radio communication with the base station according to Embodiment 1;
FIG.4 is a block diagram showing a configuration of the base station according to Embodiment 1;
FIG.5 is a first schematic diagram showing determination areas according to Embodiment 1;
FIG.6 is a second schematic diagram showing other determination areas according to Embodiment 1;
FIG.7 is a block diagram showing a configuration of a mobile station that carries out a radio communication with a base station according to Embodiment 2;
FIG.8 is a system block diagram showing a configuration of a radio communication system including a base station according to Embodiment 3 of the present invention;
FIG.9 is a first frame block diagram showing a frame configuration of a downlink signal according to Embodiment 3;
FIG.10 is a block diagram showing a configuration of a mobile station that carries out a radio communication with the base station according to Embodiment 3;
FIG.11 is a block diagram showing a configuration of the base station according to Embodiment 3;
FIG.12 is a schematic diagram showing determination areas according to Embodiment 3; and
FIG.13 is a second frame block diagram showing another frame configuration of a downlink signal according to Embodiment 3.

### Best Mode for Carrying out the Invention

With reference now to the attached drawings, the embodiments of the present invention are explained in detail below. In the following explanations, data/signal transmitted from a base station are called "downlink data/downlink signal" and data/signal transmitted from a mobile station are called "uplink data/uplink signal." Furthermore, data/signal transmitted/received by mobile station A are called "data A/signal A" and data/signal transmitted/received by mobile station B are called "data B/signal B."

### (Embodiment 1)

A CDMA system is an access system that can carry out communications with a plurality of mobile stations using a same frequency in a same area and at a same time by assigning a spreading code that is specific to each mobile station and orthogonal to other mobile stations and spreading the transmission data using the spreading code and then transmitting the transmission data.

The CDMA system measures reception power of a reception signal and transmits a transmission signal with the measurement result carried on a power control signal in the transmission signal. This allows the transmission power of a transmission signal to be controlled.

However, when the base station carries out transmission with directivity, even with a directivity shift the reception power of the mobile station decreases and the base station increases the transmission power. As a result, interference with other mobile stations increases, which deteriorates the communication quality of the system as a whole.

Embodiment 1 refers to an embodiment, when a base station carries out transmission with directivity using a CDMA system, that precisely performs directivity control and transmission power control.

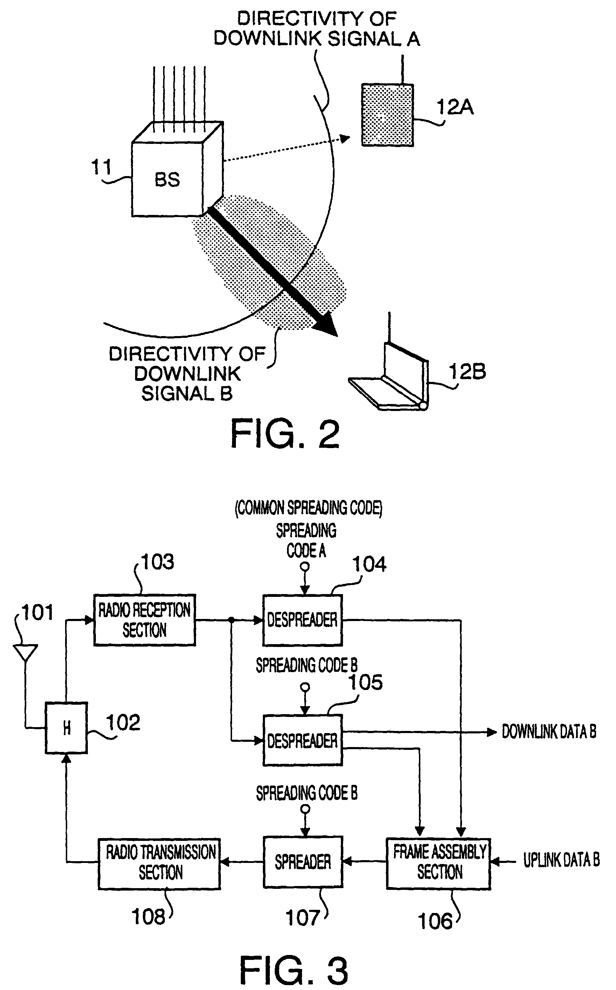

FIG.2 is a system block diagram showing a configuration of a radio communication system including a base station according to Embodiment 1 of the present invention.

In the radio communication system shown in FIG.2, base station 11 simultaneously transmits signals with different directivities from an antenna to mobile stations 12A and 12B in a cell in communication. Here, suppose the directivity of downlink signal A is broader than that of downlink signal B. Also suppose spreading code A and spreading code B are assigned to mobile station 12A and mobile station 12, respectively.

First, a configuration of a mobile station that carries out a radio communication with the base station according to Embodiment 1 is explained using the block diagram in FIG.3.

In mobile station 12B shown in FIG.3. radio reception section 103 converts the frequency of a downlink signal input from antenna 101 via sharing device 102 to an intermediate frequency or baseband frequency.

Despreader 104 despreads the signal input from radio reception section 103 using spreading code A and measures the reception power of downlink signal A. The reception power with this despreading result is the reception power at mobile station 12B of downlink signal A (hereinafter referred to as "reception power A").

Despreader 105 despreads the signal input from radio reception section 103 using spreading code B and extracts downlink data B directed to the mobile station and measures the reception power of downlink signal B as well. The reception power with this despreading result is the reception power at mobile station 12B of downlink signal B (hereinafter referred to as "reception power B").

Here, if base station 11 carries out a communication with another mobile station (mobile station 12A) simultaneously, despreader 104 can measure reception power A. However, if there is no other mobile station in communication in the same cell, an alternate signal is necessary. In this case, a similar effect can be obtained by base station 11 sending a common signal to all mobile stations and by despreader 104 measuring the reception power of the common signal.

Base station 11 can also send a common signal all the time and despreader 104 can measure the reception power of the common signal. In this case, it is not necessary to switch spreading codes used for despreading. On the other hand, when spreading codes are switched, no common signal is required when communicating with another mobile station (mobile station 12A) simultaneously, making it possible to reduce interference of the downlink.

Frame assembly section 106 assembles a frame by carrying data with reception power A and reception power B on uplink data B. Spreader 107 obtains uplink signal B by multiplying uplink data B that was assembled into a frame by frame assembly section 106 by spreading code B.

Radio transmission section 108 converts the frequency of uplink signal B input from spreader 107 to a radio frequency, amplifies its transmission power and transmits it from antenna 101 to base station 11 via sharing device 102.

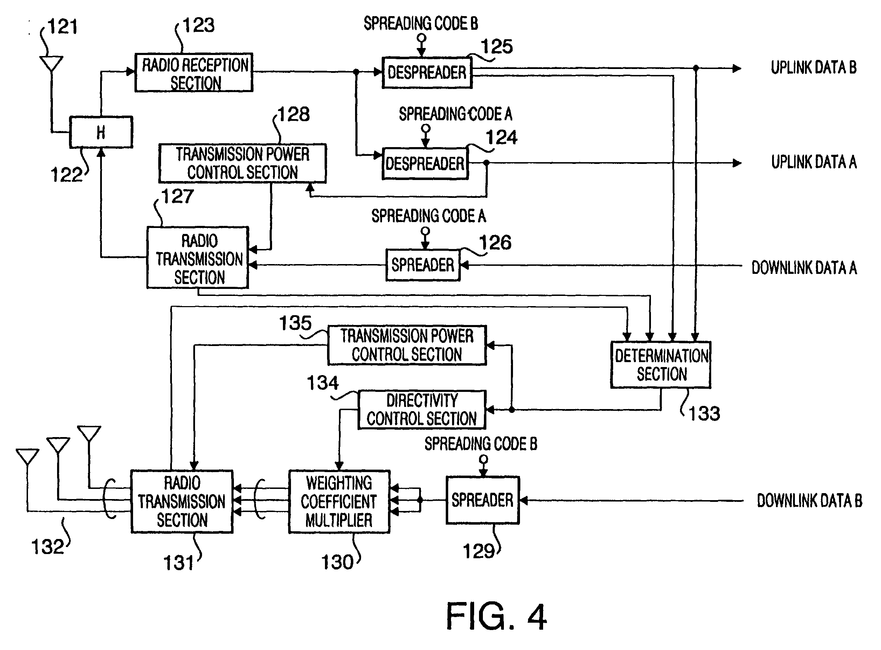

Then the configuration of the base station according to Embodiment 1 is explained using the block diagram shown in FIG.4.

In base station 11 shown in FIG.4. radio reception section 123 converts the frequency of the uplink signal input from antenna 121 via sharing device 122 to an intermediate frequency or baseband frequency. Despreader 124 despreads the signal input from radio reception section 123 using spreading code A and extracts uplink data A transmitted from mobile station 12A. Despreader 125 despreads the signal input from radio reception section 123 using spreading code B and extracts uplink data B transmitted from mobile station 12B.

Spreader 126 multiplies downlink data A for mobile station 12A by spreading code A and obtains downlink signal A. Radio transmission section 127 converts the frequency of downlink signal A to a radio frequency, amplifies the transmission power of downlink signal A and transmits it from antenna 121 via sharing device 122 with broader directivity and at the same time measures transmission power A of downlink signal A and outputs the measurement result to determination section 133. Transmission power control section 128 extracts a power control signal from uplink data A output from despreader 124 and controls the transmission power of downlink signal A at the radio transmission section based on the information of the power control signal.

Spreader 129 multiplies downlink data B for mobile station 12B by spreading code B and obtains downlink signal B. Weighting coefficient multiplier 130 multiplies down link signal B which was split into a plurality of portions by weighting coefficients to provide directivity. Radio transmission section 131 converts all frequencies of split downlink signal B to radio frequencies, amplifies the transmission power of downlink signal B and transmits it from antenna 132 with narrow directivity. At that time, radio transmission section 131 measures transmission power B of downlink signal B and outputs the measurement result to determination section 133.

Determination section 133 stores transmission power A input from radio transmission section 127 and transmission power B input from radio transmission section 131. Determination section 133 also extracts reception power A and reception power B from uplink data B and calculates the ratio of transmission power A to transmission power B (hereinafter referred to as "transmission power ratio") and the ratio of reception power A to reception power B (hereinafter referred to as "reception power ratio "). Determination section 133 further sets threshold X1 which is a reference to determine whether directivity is shifted or not and determines whether the difference between the transmission power ratio and reception power ratio is greater than threshold X1 or not.

If the directivity for mobile station 12B is corrects, the reception power ratio is virtually equal to the transmission power ratio. On the other hand, if the directivity for mobile station 12B is shifted, reception power B measured at mobile station 12B decreases and the difference between the transmission power ratio and reception power ratio increases.

That is, if the difference between the transmission power ratio and reception power ratio is greater than threshold X1, it is possible to determine that the directivity is shifted.

Determination section 133 extracts a power control signal from uplink data B and determines whether a decrease of transmission power is requested or an increase of transmission power is requested.

Directivity control section 134 updates weighting coefficients of weighting coefficient multiplier 130 based on the determination result of determination section 133 and controls the directivity of downlink signal B. Transmission power control section 135 controls the transmission power of downlink signal B at radio transmission section 131 based on the determination result of determination section 133.

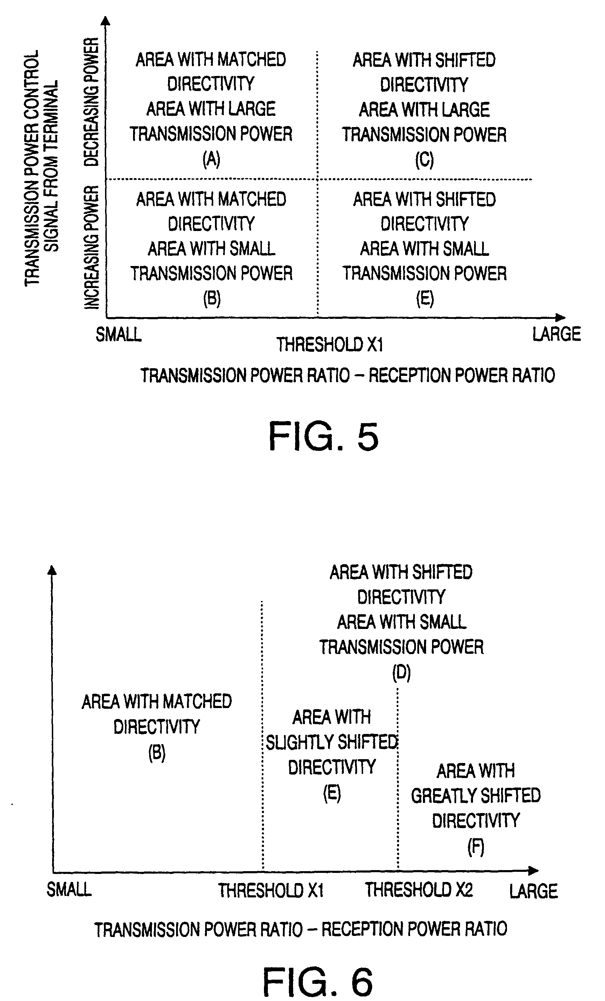

Then, the determination result of determination section 133, processing of directivity control section 134 and transmission power control section 135 on this determination result are explained in detail below using the area map shown in FIG.5.

The determination result of determination section 133 belongs to one of the four determination areas shown in FIG.5. Area A is an area with matched directivity and large transmission power. Area B is an area with matched directivity and small transmission power. Area C is an area with shifted directivity and large transmission power. Area D is an area with shifted directivity and small transmission power.

Directivity control section 134 and transmission power control section 135 determine the processing content based on which area the determination result of determination section 133 belongs to.

If the determination result belongs to area A, it is possible to determine that the directivity for mobile station 12B is matched, and directivity control section 134 leaves the directivity of downlink signal B as it is. Transmission power control section 135 then performs transmission power control to reduce the transmission power.

If the determination result belongs to area B, it is possible to determine that the reception power of downlink signal B received by mobile station 12B is small because the transmission power is small, and directivity control section 134 leaves the directivity of downlink signal B as it is. Transmission power control section 135 then performs transmission power control to increase the transmission power.

If the determination result belongs to area C, it is possible to determine that the directivity for mobile station 12B is shifted but the transmission power is large and downlink signal B has arrived at mobile station 12B, and therefore directivity control section 134 leaves the directivity of downlink signal B as it is. Transmission power control section 135 then performs transmission power control to reduce the transmission power.

If the determination result belongs to area D, it is possible to determine that the reception power of downlink signal B received by mobile station 12B is small because the directivity for mobile station 12B is shifted, and therefore directivity control section 134 controls the directivity of downlink signal B. Transmission power control section 135 then performs transmission power control to maintain the transmission power as it is.

As shown above, by calculating the transmission power ratio and reception power ratio of 2 signals with different directivities and determining whether the difference between the transmission power ratio and reception power ratio is greater than a reference value or not, it is possible to accurately determine whether the cause for the small reception power at the mobile station is due to a directivity shift or due to insufficient transmission power and correct the transmission power and directivity.

The following is an explanation of specific examples of control performed by directivity control section 134 when determination section 133 determines that directivity control is necessary, that is, when the determination result belongs to area D.

A first example is a method of tracking directivity by changing only the direction of directivity without changing the width of directivity.

If the determination result belongs to area D, directivity control section 134 turns the directivity to the right or the left and transmits downlink signal B.

If determination section 133 next determines that the shift of directivity has been improved compared to the previous one, that is, the difference between the transmission power ratio and reception power ratio is smaller than the previous one, the directivity is turned in the same direction as the previous direction.

On the contrary, if determination section 133 next determines that the shift of directivity is worse than the previous one, that is, the difference between the transmission power ratio and reception power ratio is greater than the previous one, the directivity is turned in the direction opposite to the previous direction.

Directivity is changed in this way until the determination result belongs to area A or area B.

A second example is a directivity tracking method in which directivity is matched by broadening the width of directivity without changing the orientation of directivity first, and then changing the orientation.

If the determination result belongs to area D, directivity control section 134 broadens the width of directivity without changing the orientation of directivity and transmits downlink signal B.

If determination section 133 next determines that the directivity is shifted, that is, the determination result remains in area D, downlink signal B is transmitted with its directivity further broadened. Then, the directivity is broadened until the determination result belongs to area A or area B.

When the determination result belongs to area A or area B, directivity control section 134 turns the directivity to the left or right according to the method shown in the first example with directivity broadened, detects the direction where the difference between the transmission power ratio and reception power ratio becomes the smallest, and then narrows the directivity while fixing the orientation of directivity and restores the first condition.

Compared to the first example, the second example allows directivity tracking while maintaining a certain reception quality at the mobile station.

A third example is a method combining the methods shown in the first example and the second example according to how directivity orientation is shifted.

Here, in addition to threshold X1, judgment section 133 sets threshold X2 (> threshold X1) and divides area D in FIG.5 into area E and area F through threshold X2 as shown in FIG.6 and outputs the determination result.

Area E corresponds a case where the value obtained by subtracting the reception power ratio from the transmission power ratio is greater than threshold X1 and smaller than threshold X2, that is, the directivity is slightly shifted.

Area F corresponds to a case where the value obtained by subtracting the reception power ratio from the transmission power ratio is greater than threshold X2, that is, the directivity is greatly shifted.

If the determination result belongs to area E, directivity tracking is possible with the same narrow directivity, and therefore the directivity control section performs directivity tracking according to the method shown in the first example with the same narrow directivity.

If the determination result belongs to area F, downlink signal B may not have arrived at mobile station 12Band it is necessary to immediately make the signal arrive at mobile station 12B, and therefore, the directivity control section performs directivity tracking according to the method shown in the second example by broadening the width of directivity to secure the communication quality and then performing directivity tracking.

The third example determines with two reference values when modifying the transmission power and directivity and can thereby perform directivity tracking by adaptively selecting the method of either the first example or the second example according to the situation.

Then, the flow of downlink signal B of the radio communication system according to Embodiment 1 is explained.

In base station 11, downlink data B is multiplied by spreading code B in spreader 129 and downlink signal B is generated.

Downlink signal B generated is split into a plurality of portions and multiplied by weighting coefficients in weighting coefficient multiplier 130 and given directivity. These weighting coefficients are controlled by directivity control section 134 based on the result of determination section 133.

Then, with its transmission power amplified by radio transmission section 131 and frequency converted into a radio frequency, downlink signal B is transmitted from antenna 132. At this time, the measured transmission power of downlink signal B is output to determination section 133. At the same time, the measured transmission power of downlink signal A transmitted from radio transmission section 127 is output to determination section 133.

Downlink signal B transmitted by radio is received by antenna 101 of mobile station 12B, input to radio reception section 103 via sharing device 102 and its frequency is converted to an intermediate frequency or baseband frequency.

Downlink signal B output from radio reception section 103 is multiplied by spreading code B in despreader 105 and downlink data B is extracted. At this time, the reception power of downlink signal B is measured and the measured value is output to frame assembly section 106. Furthermore, the reception power of downlink signal A multiplexed with downlink signal B is measured by despreader 104 and the measured value is output to frame assembly section 106.

Then, the flow of uplink signal B of the radio communication system according to Embodiment 1 is explained.

In mobile station 12B, uplink data B is assembled into a frame by frame assembly section 106. At this time, the measured values of the reception power of downlink signal B and downlink signal A are carried on the frame.

Frame-assembled uplink signal B is multiplied by spreading code B in spreader 107, and with its transmission power amplified and frequency converted to a radio frequency by radio transmission section 108, is transmitted from antenna 101 via sharing device 102.

Uplink signal B transmitted by radio is received by antenna 121 at base station 11, input to radio reception section 123 via sharing device 122 with its frequency converted to an intermediate frequency or baseband frequency.

Uplink signal B output from radio reception section 123 is multiplied by spreading code B in despreader 125 and uplink data B is extracted. At this time, the reception power of uplink signal B is measured and the measured value is output to determination section 133. Furthermore, the reception powers of the power control signal extracted from uplink data B, downlink signal A and downlink signal B are output to determination section 133.

Then, determination section 133 determines whether the directivity of downlink signal B is matched and whether the transmission power is appropriate or not.

Embodiment 1 explained above uses a CDMA system as the access system, but the present invention is not limited to the CDMA system but can achieve similar effects using other access systems.

### (Embodiment 2)

In Embodiment 1, mobile station 12B reported both reception power A of measured downlink signal A and reception power B of downlink signal B to the base station using uplink signal B.

However, it is possible to determine whether the directivity of a downlink signal transmitted from the base station is matched or not through the difference between the transmission power ratio and reception power ratio and the mobile station only needs to report the reception power ratio to the base station.

As opposed to Embodiment 1, Embodiment 2 explains a case where the amount of data of directivity control to be reported by the mobile station to the base station is reduced. The system configuration of Embodiment 2 is the same as that in FIG.2 described in Embodiment 1, and thus its explanations are omitted.

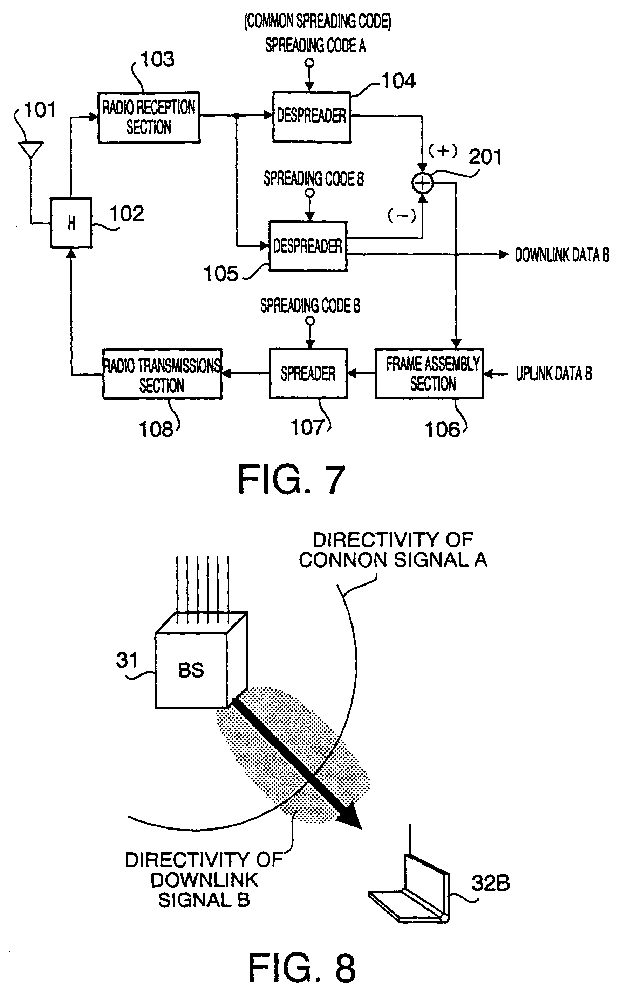

FIG.7 is a block diagram showing a configuration of a mobile station that carries out a radio communication with a base station according to Embodiment 2. The parts common to FIG.3 are assigned the same numbers and their explanations are omitted.

In mobile station 12B shown in FIG.7, subtracter 201 inputs reception power A from despreader 104 and inputs reception power B from despreader 105. Subtracter 201 then calculates a reception power ratio which is the difference between reception power A and reception power B and outputs the calculation result to frame assembly section 106.

Frame assembly section 106 assembles frames by carrying the reception power ratio data input from subtracter 201 on uplink data B.

Furthermore, determination section 133 of the base station extracts the reception power ratio from uplink data B. The configuration of the base station is the same as that in FIG.4 explained in Embodiment 1.

This makes it possible to reduce the amount of control data that occupies in the uplink data transmitted from the mobile station and increase other data to be carried on a 1-frame signal. Moreover, the base station can reduce the circuit scale of the determination section.

### (Embodiment 3)

A TDD (Time Division Duplex) system is a signal division system that carries out communications using a same frequency for a transmission signal and reception signal and assigning the uplink and downlink to different times. Since the transmission signal and reception signal have the same frequency, the uplink and downlink have high correlation in transmission environment. Therefore, the power of the signal received by the mobile station on the downlink is estimated from the reception power on the uplink.

However, when the base station performs transmission with directivity, even a directivity shift causes the reception power from the mobile station to reduce, which makes the base station to increase its transmission power. As a result, interference with other mobile stations increases, deteriorating the communication quality of the system as a whole.

Embodiment 3 refers to an embodiment, when a base station carries out transmission with directivity using a TDD system, that precisely performs directivity control and transmission power control.

FIG.8 is a system diagram showing a configuration of a radio communication system including the base station according to Embodiment 3.

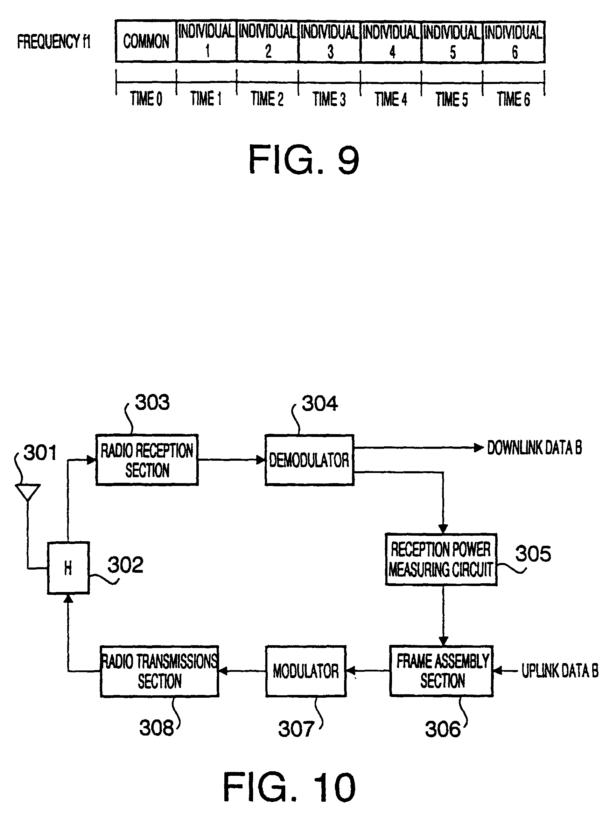

In the radio communication system shown in FIG.8, base station 31 transmits downlink signal A common to all mobile stations and downlink signal B for mobile station 32B in communication in a cell at a same frequency (f1) by means of time division. Suppose the directivity of downlink signal A is broader than the directivity of downlink signal B. As shown in frame block diagram in FIG.9, base station 31 transmits downlink signal A at time 0 and transmits downlink signal B at time 1.

The configuration of the mobile station that carries out a radio communication with the base station according to Embodiment 3 is explained using the block diagram in FIG.10.

In mobile station 32B shown in FIG.10, radio reception section 303 converts the frequency of a downlink signal input from antenna 301 via sharing device 302 to an intermediate frequency or baseband frequency.

Demodulator 304 demodulates the signal input from radio reception section 303. Power reception measuring circuit 305 measures the reception power of the demodulated signal. The reception power at time 0 is reception power A of a common signal at mobile station 32B and the reception power at time 1 is reception power B of downlink signal B at mobile station 32B.

Frame assembly section 306 assembles frames by carrying the reception power A and reception power B data on uplink data B. Modulator 307 modulates uplink data B formed into a frame by frame assembly section 306 and obtains uplink signal B.

Radio transmission section 308 converts the frequency of uplink signal B input from modulator 307 to a radio frequency, and with its transmission power amplified, transmits it from antenna 301 via sharing device 302 to base station 31.

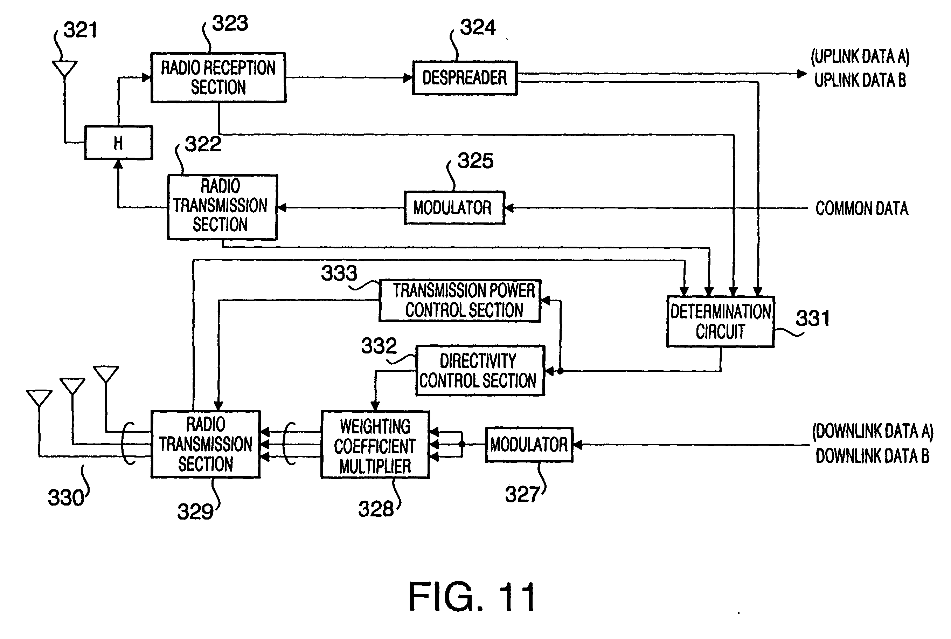

Then, the configuration of the base station according to Embodiment 3 is explained using the block diagram shown in FIG.11.

In base station 31 shown in FIG.11, radio reception section 323 converts the frequency of an uplink signal input from antenna 321 via sharing device 322 to an intermediate frequency or baseband frequency. Demodulator 324 demodulates the signal input from radio reception section 323.

Modulator 325 modulates common data and obtains a common signal. Radio transmission section 326 convents the frequency of the common signal to a radio frequency, amplifies the transmission power of the common signal and transmits it from antenna 331 via sharing device 322 with broader directivity and at the same time measures transmission power A of the common signal and outputs the measurement result to determination section 331.

Modulator 327 modulates downlink data B to mobile station 32B and obtains downlink signal B. Weighting coefficient multiplier 328 multiplies downlink signal B split into a plurality of portions by weighting coefficients to give directivity. Radio transmission section 329 converts all frequencies of split downlink signal B to radio frequencies, amplifies the transmission power of downlink signal B and transmits it from antenna 330 with narrow directivity. At that time, radio transmission section 329 measures transmission power B of downlink signal B and outputs the measurement result to determination section 331.

Determination section 331 stores transmission power A input from radio transmission section 326 and transmission power B input from radio transmission section 329. It also extracts reception power A and reception power B from uplink data B. Then, it calculates a transmission power ratio and reception power ratio. Furthermore, it sets threshold X1 which is a reference as to whether directivity is shifted or not and determines whether the difference between the transmission power ratio and reception power ratio is greater than threshold X1 or not.

As in the case of Embodiment 1, if the difference between the transmission power ratio and reception power ratio is greater than threshold X1, it is possible to determine that the directivity is shifted.

Moreover, determination section 331 measures the reception power of uplink signal B at radio reception section 323. Then, determination section 331 sets threshold Y1 to be a reference as to whether the transmission power is large or not and threshold Y2 (< threshold Y1) to be a reference as to whether transmission power is small or not and determines whether the transmission power is large or small or good or not. That is, if the reception power of uplink signal B is greater than threshold Y1, it is possible to determine that the transmission power is large and if the reception power of uplink signal B is smaller than threshold Y2, it is possible to determine that the transmission power is small, and if the reception power of uplink signal B is greater than threshold Y2 and smaller than threshold Y1, it is possible to determine that the transmission power is good.

Directivity control section 332 updates the weighting coefficient of weighting coefficient multiplier 328 based on the determination result of determination section 331 and controls the directivity of downlink signal B. Transmission power control section 333 controls amplification of the transmission power of downlink signal B at radio transmission section 329 based on the determination result of determination section 331.

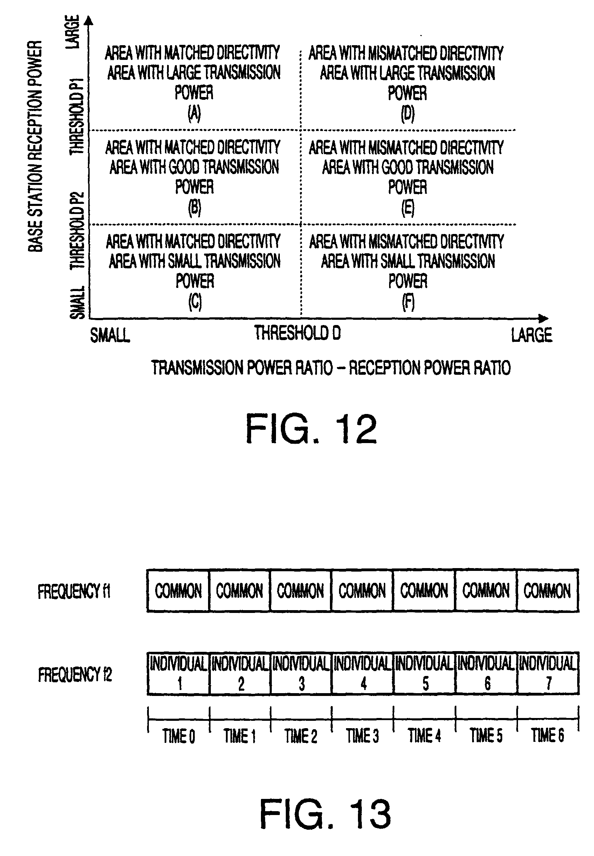

Then, the determination result of determination section 133 and processing of directivity control section 134 and transmission power control section 135 on this determination result are explained in detail below using the area map shown in FIG.12.

The determination result of the determination section belongs to one of the 6 determination areas shown in FIG.12. Area A is an area with matched directivity and large transmission power. Area B is an area with matched directivity and good transmission power. Area C is an area with matched directivity and small transmission power. Area D is an area with shifted directivity and large transmission power. Area E is an area with shifted directivity and good transmission power. Area F is an area with shifted directivity and small transmission power.

Directivity control section 332 and transmission power control section 333 determine their processing depending on which of the areas above the determination result of determination section 331 belongs to.

If the determination result belongs to area A, it is possible to determine that the directivity to mobile station 32B is matched, and therefore directivity control section 332 leaves the directivity of downlink signal B as it is. Transmission power control section 333 then performs transmission power control to reduce the transmission power.

If the determination result belongs to area B, it is possible to determine that the directivity to mobile station 32B is matched and the transmission power is good, and therefore directivity control section 332 leaves the directivity of downlink signal B as it is. Transmission power control section 333 then performs transmission power control to maintain transmission power as it is.

If the determination result belongs to area C, it is possible to determine that the small reception power of downlink signal B is attributable to small transmission power, and therefore directivity control section 332 leaves the directivity of downlink signal B as it is. Transmission power control section 333 then performs transmission power control to increase the transmission power.

If the determination result belongs to area D, it is possible to determine that the directivity to mobile station 32B is shifted but the transmission power decreases greatly and downlink signal B has arrived at mobile station 32B, and therefore directivity control section 332 leaves the directivity of downlink signal B as it is. Transmission power control section 333 then performs transmission power control to reduce the transmission power.

If the determination result belongs to area E, it is possible to determine that the reception power of downlink signal B received by mobile station 32B is good and the directivity to mobile station 32B is shifted, and therefore directivity control section 332 controls the directivity of downlink signal B. Transmission power control section 333 then performs transmission power control to maintain transmission power as it is.

If the determination result belongs to area F, it is possible to determine that the small reception power of downlink signal B is attributable to shifted directivity to mobile station 32B, and therefore directivity control section 332 controls the directivity of downlink signal B. Transmission power control section 333 then performs transmission power control to maintain the transmission power as it is.

If determination section 331 determines that directivity control is necessary, that is, if the determination result belongs to area E or area F, directivity control section 332 performs directivity tracking in the same way as in Embodiment 1.

Thus, when carrying out transmission with directivity from the base station using a TDD system, transmission power and directivity can be corrected based on the reception power of the base station. At this time, two reference values can be used, which allows more precise correction of transmission power and directivity than one reference value.

Then, the flow of downlink signal B of the radio communication system according to Embodiment 3 is explained below.

In base station 31, downlink data B is modulated by modulator 327 and downlink signal B is created.

Downlink signal B created is split into a plurality of portions and multiplied by weighting coefficients and given directivity in weighting coefficient multiplier 328. These weighting coefficients are controlled by directivity control section 332 based on the result of determination section 331.

Then, with its transmission power amplified and frequency converted to a radio frequency by radio transmission section 329, downlink signal B is transmitted from antenna 330. At this time, the measured value of the transmission power of downlink signal B is output to determination section 331. At the same time, the measured value of the transmission power of downlink signal A transmitted from radio transmission section 329 is output to determination section 331.

Downlink signal B transmitted by radio is received by antenna 301 of mobile station 32B, input to radio reception section 303 via sharing device 302 and its frequency is converted to an intermediate frequency or baseband frequency.

Downlink signal B output from radio reception section 303 is demodulated by demodulator 304 and downlink data B is extracted. Then, the reception power of downlink signal B is measured by reception power measuring section 305 and the measured value is output to frame assembly section 306. Furthermore, the reception power of downlink signal A is also measured by reception power measuring section 305 and the measured value is output to frame assembly section 306.

Then, the flow of uplink signal B of the radio communication system according to Embodiment 1 is explained below.

In mobile station 12B, uplink data B are assembled into a frame by frame assembly section 306. At this time, the measured values of the reception power of downlink signal B and downlink signal A are carried on a frame.

Frame-assembled uplink signal B is modulated by modulator 307, and with its transmission power amplified and frequency converted to a radio frequency by radio transmission section 308, transmitted from antenna 301 via sharing device 302.

Radio-transmitted uplink signal B is received by antenna 321 of base station 31, input to radio reception section 323 via sharing device 322 and its frequency is converted to an intermediate frequency or baseband frequency. At this time, the reception power of uplink signal B is measured and the measured value is output to determination section 331.

Uplink signal B output from radio reception section 323 is demodulated by demodulator 125 and uplink data B is extracted. At this time, the reception power of uplink signal B is measured and the measured value is output to determination section 331. Furthermore, the measured values of the power control signal and downlink signal A extracted from uplink data B and the reception power of downlink signal B are output to determination section 331.

Then, determination section 331 determines whether the directivity of downlink signal B is matched or not or whether the transmission power is appropriate or not.

Embodiment 3 explained the case where base station 31 transmits downlink signal A and downlink signal B at a same frequency, but the present invention can also be implemented with downlink signal A and downlink signal B with different transmission frequencies as shown in FIG.13.

The above embodiment explained the method of controlling directivity by changing weighting coefficients of a plurality of antennas, but the present invention is not limited to this and can achieve similar effects by using other methods of controlling directivity such as selecting the most suitable antenna from among a plurality of antennas with directivity. The above embodiment also explained the method of forming directivity with a baseband frequency, but the present invention is not limited to this and can achieve similar effects by using other methods of forming directivity such as forming directivity with a transmission frequency.

The above embodiment determines whether directivity is matched or not based on the difference between the transmission power ratio and reception power ratio, but whether directivity is matched or not can also be determined based on other data.

The present invention is also valid for a radio communication system and radio communication method without controlling transmission power. In this case, the base station only determines whether the difference between the transmission power ratio and reception power ratio is greater than a set threshold or not.

This application is based on the Japanese Patent Application No.HEI 10-100547 filed on March 27, 1998, entire content of which is expressly incorporated by reference herein.

### Industrial Applicability

The present invention is suitable for a radio communication system in which a base station transmits directivity-carrying signals to a plurality of mobile stations.

## Claims

1. A base station apparatus comprising:
downlink transmitter to transmit a first signal to a specific mobile station apparatus and transmitting a second signal to another mobile station apparatus with directivity different from that of said first signal;
determiner to determine whether the directivity of said first signal should be changed or not; and
directivity controller to change the directivity of said first signal based on this determination result of the determiner.

2. The base station apparatus according to claim 1, wherein the determiner measures a transmission power ratio which is the ratio of the transmission power of the first signal to the transmission power of the second signal, measures a reception power ratio which is the ratio of the reception power of the first signal to the reception power of the second signal, and if the difference between said transmission power ratio and said reception power ratio is greater than a predetermined first threshold, determines that the directivity of said first signal should be changed.

3. The base station apparatus according to claim 1, wherein, if the difference between said reception power ratio and said transmission power ratio is greater than the predetermined first threshold and at the same time the mobile station apparatus to which the first signal was sent requests the transmission power to be increased, the determiner determines that the directivity of said first signal should be changed.

4. The base station apparatus according to claim 1, wherein, if the difference between said reception power ratio and said transmission power ratio is greater than the predetermined first threshold and at the same time the reception power of a signal transmitted from the mobile station apparatus to which the first signal was sent is smaller than a predetermined second threshold, the determiner determines that the directivity of said first signal should be changed.

5. The base station apparatus according to claim 1 comprising transmission power controller to control the transmission power of a transmission signal, said transmission power controller does not change the transmission power if the determiner determines that the directivity should be changed.

6. The base station apparatus according to claim 1, wherein, if the determiner determines that the directivity should be changed, the directivity controller changes the directivity orientation without changing the width of directivity.

7. The base station apparatus according to claim 1, wherein, if the determiner determines that the directivity should be changed, the directivity controller broadens the width of directivity by a certain amount with respect to the width of the previous directivity, adjusts the transmission power, changes the directivity orientation and returns the width of directivity to the original value.

8. The base station apparatus according to claim 1, wherein, if the determiner determines that the directivity should be changed, the directivity controller broadens the width of directivity drastically, changes the directivity orientation, adjusts the directivity orientation and then returns the width of directivity to the original value.

9. The base station apparatus according to claim 1, wherein the determiner sets a third threshold greater than the first threshold, and if the difference between the reception power ratio and said transmission power ratio is greater than the third threshold, determines that the directivity shift of the first signal is greater, and if the difference between the reception power ratio and said transmission power ratio is greater than the first threshold and smaller than the second threshold, determines that the directivity shift of said first signal is smaller.

10. The base station apparatus according to claim 9, wherein, if the determiner determines that the directivity shift of the first signal is greater, the directivity controller broadens the width of directivity drastically to adjust the directivity, and if the determiner determines that the directivity shift of said first signal is smaller, does not change the width of directivity but changes the directivity orientation.

11. The base station apparatus according to claim 9, wherein, if the determiner determines that the directivity shift of the first signal is greater, the directivity controller broadens the width of directivity and changes the directivity orientation, adjusts the directivity and then returns the width of directivity to the original value, and if the determiner determines that the directivity shift of said first signal is smaller, does not change the width of directivity but changes the directivity orientation.

12. A mobile station apparatus comprising:
first measuring means for measuring the reception power of a first signal transmitted from the base station apparatus according to claim 1 to said mobile station;
second measuring means for measuring the reception power of a second signal transmitted from the base station apparatus to other than said mobile station; and
uplink transmitter for transmitting the measurement results of said first and second measuring means to the base station apparatus.

13. The mobile station apparatus according to claim 12 comprising reception power calculating means for calculating a reception power ratio which is a ratio of the reception power of the first signal to the reception power of the second signal, wherein the uplink transmitter transmits said reception power ratio.

14. The mobile station apparatus according to claim 12, wherein the reception power calculating means uses a common signal applicable to any mobile station apparatuses as the second signal.

15. A radio communication method, wherein a base station apparatus transmits a first signal to a specific mobile station apparatus, at the same time transmits a second signal to another apparatus other than said mobile station apparatus with directivity different from that of said first signal, said mobile station apparatus measures the reception power of said first signal and said second signal and transmits the measurement results to the base station apparatus, said base station apparatus measures a transmission power ratio which is a ratio of the transmission power of said fist signal to the transmission power of said second signal, measures a reception power ratio which is a ratio of the reception power of said fist signal to the reception power of said second signal, determines whether the directivity of said first signal should be changed or not based on the difference between said transmission power ratio and said reception power ratio and changes the directivity of said first signal based on the determination result.

16. The radio communication method according to claim 15, wherein the mobile station apparatus that received the first signal calculates a reception power ratio and transmits it to the base station apparatus.

17. The radio communication method according to claim 16, wherein, if the difference between the transmission power ratio and reception power ratio is greater than a predetermined first threshold, the base station apparatus changes the directivity of the first signal.

18. The radio communication method according to claim 16, wherein, if the difference between the reception power ratio and transmission power ratio is greater than a predetermined first threshold and at the same time the mobile station apparatus that received the first signal requests the transmission power to be increased, the base station apparatus changes the directivity of said first signal.

19. The radio communication method according to claim 16, wherein, if the difference between the reception power ratio and transmission power ratio is greater than a predetermined first threshold and at the same time the reception power of a signal transmitted from the mobile station apparatus that received the first signal is smaller than a predetermined second threshold, the base station apparatus changes the directivity of said first signal.
